Europäisches Patentamt

(19) European Patent Office

Office européen des brevets

(11) Numéro de publication : **0 120 767 B1**

# (12) FASCICULE DE BREVET EUROPÉEN

(45) Date de publication du fascicule du brevet :
27.05.87

(21) Numéro de dépôt : **84400543.9**

(22) Date de dépôt : **16.03.84**

(51) Int. Cl.⁴ : **H 04 N 17/04**, H 01 J 9/42

(54) **Procédé de mesure de convergence d'un tube cathodique à trois canons et à masque perforé, et dispositif de mise en oeuvre.**

(30) Priorité : **25.03.83 FR 8304981**

(43) Date de publication de la demande :
**03.10.84 Bulletin 84/40**

(45) Mention de la délivrance du brevet :
**27.05.87 Bulletin 87/22**

(84) Etats contractants désignés :
**DE GB IT NL**

(56) Documents cités :
**EP-A- 0 030 259**
**GB-A- 2 048 625**

(73) Titulaire : **VIDEOCOLOR**
**7, boulevard Romain-Rolland**
**F-92128 Montrouge (FR)**

(72) Inventeur : **Legrand, Guy**
**THOMSON-CSF SCPI 173, bld Haussmann**
**F-75379 Paris Cedex 08 (FR)**
Inventeur : **Faivre, Michel**
**THOMSON-CSF SCPI 173, bld Haussmann**
**F-75379 Paris Cedex 08 (FR)**

(74) Mandataire : **Chaverneff, Vladimir et al**
**THOMSON-CSF SCPI 19, avenue de Messine**
**F-75008 Paris (FR)**

## Description

La présente invention a pour objet un procédé de mesure de convergence d'un tube cathodique à trois canons et à masque perforé, ainsi qu'un dispositif de mise en œuvre de ce procédé.

On connaît d'après le brevet français 2 480 032 un procédé d'analyse de la convergence d'un tube cathodique à trois canons en ligne selon lequel on mesure à travers une fente d'analyse l'intensité lumineuse d'une ligne lumineuse monochrome verticale ou horizontale se déplaçant sur l'écran du tube cathodique. Un tel procédé nécessite des circuits spéciaux de balayage, différents des circuits classiques, et ne peut donc être mis en œuvre sur des postes de télévision sans modification de ceux-ci.

On connaît d'après le document GB-A-2 048 625 un procédé de mesure de convergence consistant à mesurer la distance entre centres de barres monochromes affichées sur l'écran d'un tube à mesurer, et faisant appel à un détecteur dont la surface sensible, de forme symétrique, est nulle au centre de symétrie, et augmente en s'éloignant du centre. Du fait qu'il existe une relation sensiblement linéaire entre le signal délivré par ce détecteur et la position, par rapport au centre de ce détecteur, de la barre mesurée, on peut déterminer la position des barres. Cependant, une telle relation n'est linéaire que dans la zone centrale de la surface sensible, ce qui oblige à déplacer le capteur ou la barre mesurée lorsque l'erreur de convergence n'est pas de faible valeur. En outre, le signal de sortie d'un tel détecteur dépend de la couleur des barres et de leur luminosité.

La présente invention a pour objet un procédé de mesure de convergence d'un tube cathodique du type précité, ce tube étant relié à des circuits de balayage classiques, la mesure étant effectuée sans intervention sur ces circuits de balayage, sans introduire des critères d'appréciation humains, et ce avec une précision meilleure que le 1/10 de millimètre, sans avoir à déplacer le capteur de mesure pour de fortes erreurs de convergence, ni à faire des étalonnages en fonction de la luminosité ou de la couleur de l'écran.

La présente invention a également pour objet un procédé de mesure de convergence d'un tube cathodique du type précité, ce tube étant monté dans un récepteur de télévision muni d'une prise du type « Péritel » permettant d'injecter un signal vidéo monochrome sur chacun des trois canons correspondants du tube cathodique.

La présente invention a également pour objet un dispositif de mise en œuvre du procédé de l'invention, dispositif qui soit simple à réaliser et de prix de revient faible.

Conformément à l'invention, le procédé de mesure de convergence d'un tube cathodique à trois canons et à masque perforé, ce tube étant monté dans un récepteur de télévision muni d'une prise du type permettant d'injecter un signal vidéo monochrome sur chacun des trois canons correspondants de ce tube, selon lequel on produit sur l'écran du tube, dans chacune des zones où l'on veut mesurer la convergence, des barres monochromes alternativement de deux couleurs fondamentales différentes, verticales ou horizontales, fixes, et selon lequel on détermine le milieu de ces barres, est caractérisé par le fait que ces barres ont une largeur au moins égale à sept millimètres environ, et s'étendent sur une hauteur ou largeur, respectivement, d'au moins un centimètre de part et d'autre du point de mesure, par le fait que l'on module l'intensité lumineuse de ces barres selon une loi au moins approximativement gaussienne, par le fait que l'on détermine le milieu d'une barre d'une première couleur fondamentale en mesurant la valeur de son intensité lumineuse en plusieurs points alignés selon une direction orthogonale par rapport à la barre, et en calculant le maximum de l'enveloppe du signal constitué par les valeurs successives ainsi mesurées, par le fait que l'on répète ces opérations pour une deuxième couleur fondamentale, au même endroit de mesure, et par le fait que l'on mesure la distance entre les milieux ainsi déterminés, cette distance étant la mesure de la composante horizontale ou verticale, pour des barres verticales ou horizontales respectivement, de la convergence du tube cathodique dans la zone considérée.

Selon une caractéristique avantageuse de l'invention, le signal de modulation de faisceau monochrome permettant de produire lesdites barres verticales ou horizontales est produit de façon numérique et se présente sous forme d'une succession d'échelons, dont le nombre peut être de 7 à 15 environ, selon le format du tube cathodique mesuré, la première moitié de ces échelons étant de niveau constamment croissant, et la deuxième moitié de ces échelons étant de niveau constamment croissant, et la deuxième moitié de niveau constamment décroissant, de préférence de façon symétrique par rapport à la première moitié, le niveau du palier du premier et du dernier échelons étant juste suffisant pour que l'illumination des luminophores correspondants puisse être perçue par le capteur et l'amplitude maximale de ce signal étant telle qu'elle ne provoque pas la saturation dudit capteur, la durée des paliers de ces échelons étant sensiblement identique pour tous les échelons et égale à environ 70 nanosecondes pour les barres verticales et à 64 microsecondes pour les barres horizontales, ces barres ayant alors une largeur d'environ 7 millimètres.

Le dispositif de mesure de l'invention comporte un générateur, de préférence numérique, de barres horizontales et verticales du type défini dans le procédé, relié par un sélecteur aux canons du tube cathodique à mesurer, et au moins un capteur photosensible relié à un circuit de calcul synchronisé avec ledit sélecteur, ce circuit de calcul déterminant les emplacements relatifs, par rapport à un point de référence du capteur, de chacun desdits milieux lumineux et calculant leur distance mutuelle. Selon une caractéristique de l'invention, le capteur comporte essentiellement un transducteur photosensible du type barrette photosensible à transfert de charge comprenant un grand nombre, par exemple 1024, de photodiodes alignées, et un système optique, disposé devant le transducteur et ayant un grossissement, selon l'axe longitudinal du transducteur, sensiblement égal au rapport entre la longueur de la partie active du transducteur et le double ou le triple de la largeur des barres obtenues sur l'écran, le grossissement de ce système optique étant, dans le sens perpendiculaire audit axe longitudinal du transducteur, sensiblement égal au rapport entre la largeur de ladite partie active du transducteur et la distance entre les centres de deux luminophores consécutifs d'une même colonne de luminophores de l'écran du tube cathodique. De façon avantageuse, ce système optique comprend une lentille cylindrique et une lentille biconvexe.

La présente invention sera mieux comprise à la lecture de la description détaillée d'un mode de réalisation pris comme exemple non limitatif et illustré par le dessin annexé, sur lequel :

la figure 1 est un schéma simplifié illustrant les conditions de convergence de trois faisceaux d'électrons provenant de trois canons en ligne, dans un tube cathodique de télévision couleur ;

la figure 2 est un diagramme illustrant une situation de non-convergence entre les trois faisceaux précités ;

la figure 3 est une vue en plan agrandie d'une zone de l'écran du tube cathodique pour laquelle on désire mesurer les écarts de convergence horizontale, une barre verticale de mire classique à barres étant produite dans cette zone ;

la figure 4 est un chronogramme partiel d'un signal vidéo conforme à l'invention ;

la figure 5 est une vue en plan agrandie d'une zone de l'écran du tube cathodique pour laquelle on désire mesurer les écarts de convergence horizontale, une barre verticale conforme à l'invention étant produite dans cette zone, à l'aide du signal de la figure 4 ;

la figure 6 est une vue en plan agrandie d'une zone de l'écran du tube cathodique pour laquelle on désire mesurer les écarts de convergence verticale, une barre horizontale conforme à l'invention étant produite dans cette zone, à l'aide du signal vidéo de la figure 4 ;

la figure 7 est une vue schématique en coupe d'un capteur conforme à l'invention, et

la figure 8 est un chronogramme du signal prélevé avec le capteur de l'invention disposé sensiblement au centre de l'écran du tube cathodique éclairé monochromatiquement de façon uniforme, ce signal servant à l'étalonnage du capteur.

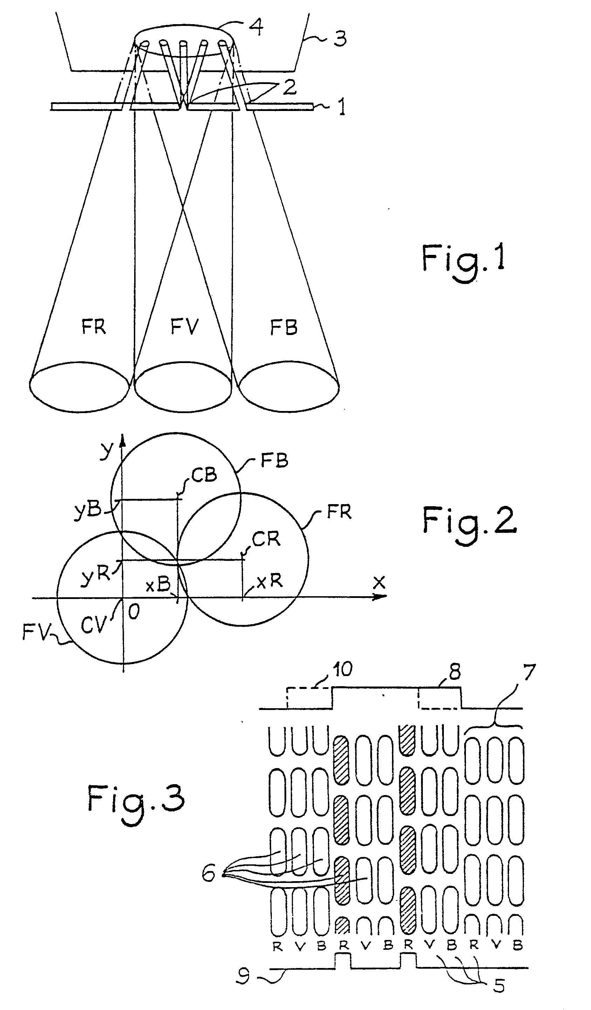

La figure 1 illustre les conditions de convergence optimales dans un tube de télévision en couleurs. Dans la suite du texte, les différents éléments analogues du tube, correspondant à chaque canon, et les colonnes de luminophores disposées sur la surface interne de l'écran du tube cathodique seront distingués par l'une des lettres R, V ou B, selon la couleur fondamentale considérée, c'est-à-dire pour un tube trichrome le rouge, le vert et le bleu. Par conséquent, les trois faisceaux $F_R$, $F_V$ et $F_B$, émis par les trois canons en ligne du tube cathodique, parviennent sur le masque d'ombre 1 avec des incidences différentes pour réaliser la sélection des couleurs et, comme le montre clairement la figure 1, seules les parties (une faible proportion) des faisceaux traversant les trous 2 du masque 1 parviennent sur l'écran pour illuminer des colonnes de luminophores. Les angles d'incidence des faisceaux $F_R$ et $F_B$ par rapport au faisceau $F_V$ qui atteint l'écran sous une incidence nulle sont les paramètres principaux du réglage de pureté du tube cathodique. Si le tube est réglé en pureté, chaque faisceau passant à travers un même trou du masque ne peut aboutir que sur une colonne de luminophores correspondant à sa propre couleur. La présence du masque 1 complique beaucoup l'analyse de convergence des trois faisceaux. En effet, une convergence est considérée comme optimale lorsque les trois faisceaux frappent à un instant donné (pendant le balayage) une même zone 4 de l'écran 3. Autrement dit, les trois taches lumineuses engendrées par les trois faisceaux doivent être confondues sur l'écran 3. Or, cette tache unique est fictive car elle n'est pas observable sur l'écran à cause de la présence du masque.

La figure 2 montre schématiquement une situation, tout aussi fictive, de non-convergence (c'est-à-dire en supposant le masque 1 enlevé) en un emplacement donné de l'écran et lorsque les faisceaux ne sont soumis à aucun balayage. On comprend qu'il est possible de définir les écarts de convergence au moyen des projections des centres $C_R$, $C_V$ et $C_B$ des impacts des trois faisceaux dans un repère orthonormé xoy. Bien entendu, on choisira l'axe ox parallèle à la direction de déflexion horizontale du tube et l'axe oy parallèle à la direction de déflexion verticale. Dans l'exemple de la figure 2 où le centre $C_V$ est représenté confondu avec l'origine du repère xoy, on voit que les projections $x_R$, $x_B$ et $y_R$, $y_B$ des centres $C_R$ et $C_B$ sur les axes ox et oy, respectivement, sont suffisantes pour définir complètement les écarts de convergence entre les trois faisceaux. Cependant, encore une fois, cette situation statique illustrée par la figure 2 est inobservable, d'une part, à cause de la présence du masque et, d'autre part, à cause de la difficulté d'observer les impacts des faisceaux immobiles. C'est pourquoi, les méthodes connues d'observation de la convergence sont mises en œuvre avec balayage de l'écran au moyen d'une « mire » composée de lignes horizontales et verticales des trois couleurs. La composante horizontale d'écart de convergence (appelée par la suite « convergence verticale ») entre deux couleurs différentes est la distance entre les lignes verticales de ces deux couleurs et la composante verticale d'écart de convergence (appelée par la suite « convergence horizontale ») est la distance entre les lignes horizontales correspondantes.

La figure 3 illustre une petite partie de l'écran du tube cathodique (vue de l'extérieur) avec un certain nombre de colonnes de luminophores 5 disposées sensiblement verticalement en considérant la position normale de visualisation du tube de télévision. Les couleurs correspondant aux différentes colonnes 5 sont indiquées à la partie inférieure de la figure 3 par des lettres R, V, B. Etant donné la présence du masque à l'arrière de l'écran, l'illumination des colonnes de luminophores fait apparaître de multiples images 6 des trous du masque (ces derniers ont souvent une forme oblongue et ont leur plus grande dimension orientée suivant la direction des colonnes) par triplets 7 des trois couleurs, à cause des différences d'incidence des trois faisceaux (voir figure 1). Bien entendu, les colonnes de luminophores ont des compositions chimiques différentes pour correspondre aux trois couleurs fondamentales et elles sont disposées dans un ordre répétitif prédéterminé (rouge, vert, bleu en les observant de l'extérieur du tube) et avec un pas prédéterminé, en relation avec le pas de perforation du masque 1. Pour des raisons évidentes de résistance mécanique, les trous oblongs 2 du masque sont disposés en quinconce de sorte qu'il en est de même pour les triplets 7 correspondants.

Si l'on illumine l'écran du tube cathodique avec une mire de barres classique, présentant des barres verticales monochromes ayant une largeur de 1,5 mm environ, ces barres se présentent en réalité chacune sous la forme de deux à trois raies verticales côte à côte résultant de l'illumination de deux ou trois colonnes de luminophores (représentés hachurés sur la figure 3) de même couleur, par exemple le rouge, faisant partie de colonnes adjacentes de triplets de luminophores. De telles barres sont produites en appliquant à l'un des canons du tube cathodique, par exemple celui correspondant à la couleur rouge, un signal vidéo tel que le signal 8 représenté partiellement sur la figure 3. Pour mesurer la convergence entre la couleur rouge et la couleur bleue par exemple, on applique ensuite le même signal 8 au canon correspondant à la couleur bleue. On obtient alors une autre série de barres semblables aux barres rouges, mais produites par l'illumination de colonnes de luminophores bleus. La mesure de la convergence verticale du tube cathodique dans une zone donnée consiste à mesurer, dans cette zone, la distance qui sépare les barres verticales des deux couleurs considérées, ou plus exactement les milieux de ces barres. Bien entendu, le signal vidéo produisant ces barres est tel qu'il produit effectivement, pour chacune des couleurs en question, une barre passant sensiblement au centre de la zone considérée.

Si l'on place un capteur photosensible approprié sur la face extérieure de l'écran du tube cathodique, dans la zone où une barre rouge est produite, on recueille à la sortie de ce capteur un signal tel que le signal 9 représenté sur la figure 3. Si l'on appliquait au même canon un signal vidéo tel que le signal 10 de la figure 3 (le signal 10 étant en avance sur le signal 8 d'une quantité équivalent au temps mis par le faisceau électronique du canon à parcourir sur l'écran deux fois le pas des colonnes 5 de luminophores), les mêmes colonnes luminophores rouges seraient illuminées, et ledit capteur photosensible produirait le même signal 9. Il en résulte donc une erreur sur la détermination du milieu de la barre rouge (ceci est évidemment valable pour les deux autres couleurs fondamentales). En d'autres termes, en raison de la présence du masque 1 du tube cathodique, il est possible que dans certains cas extrêmes on ne puisse connaître la position d'une barre verticale à mieux que deux fois le pas des colonnes de luminophores, soit environ 0,5 mm. Le procédé de la présente invention permet de lever cette imprécision.

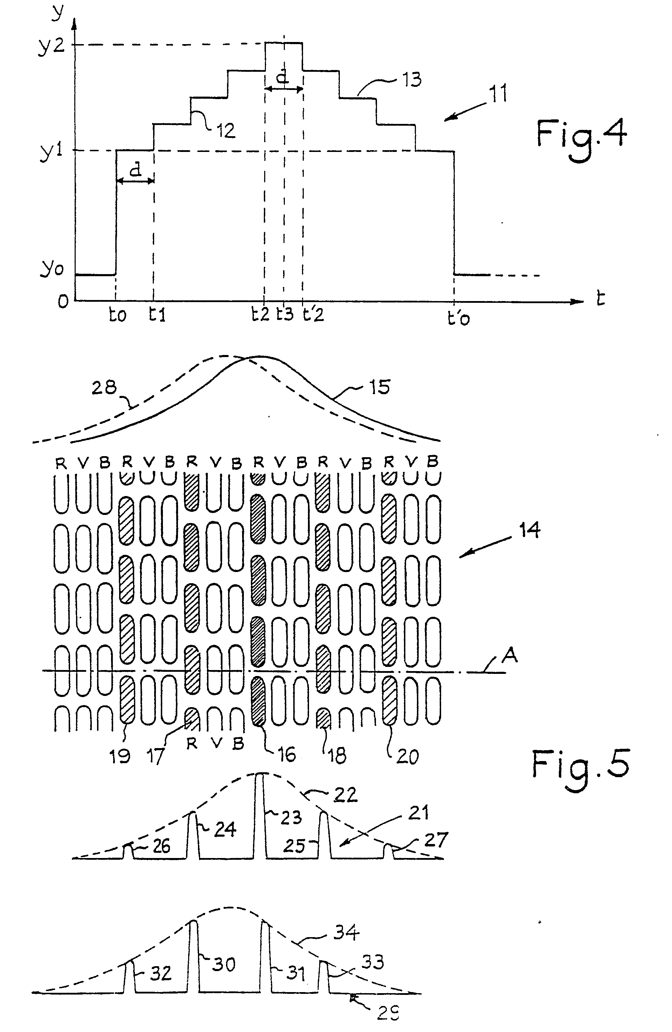

Le procédé de l'invention consiste d'abord à produire un signal vidéo monochromatique (c'est-à-dire envoyé sur un seul canon à la fois), d'allure au moins approximativement gaussienne, permettant d'obtenir sur l'écran du tube cathodique des barres horizontales ou verticales fixes dont la largeur soit d'au moins environ sept millimètres. Pour que ces barres soient toutes sensiblement identiques et reproductibles, l'invention prévoit avantageusement de produire numériquement ce signal vidéo, qui est alors similaire au signal 11 représenté sur le chronogramme de la figure 4.

Le signal 11 comporte une première partie 12 débutant à l'instant $t_0$ et se terminant à l'instant $t_3$, la partie 12 étant composée d'échelons de niveau constamment croissant, et une deuxième partie 13 débutant à l'instant $t_3$ et se terminant à l'instant $t'_0$, cette deuxième partie 13 étant composée d'échelons de niveau constamment décroissant. Les deux parties 12 et 13 sont symétriques par rapport à l'instant $t_3$ (c'est-à-dire symétriques par rapport à la verticale d'abscisse $t_3$). Avant l'instant $t_0$, le niveau du signal 11 est $y_0$, qui peut être nul, ou au maximum tel qu'il ne provoque pas l'illumination de l'écran du tube cathodique (c'est-à-dire qu'il ne doit pas dépasser le niveau du bruit cathodique moyen en l'absence de signal vidéo). A l'instant $t_0$ est produit le premier échelon dont le niveau est $y_1$, ce niveau $y_1$ correspondant à une illumination juste perceptible par le capteur. Le dernier échelon de la partie 12 du signal 11 est produit à l'instant $t_2$, et son niveau correspond à une utilisation optimale de la dynamique du système sans en provoquer la saturation. La partie 13 du signal 11 étant symétrique de la partie 12, le premier échelon descend à l'instant $t'_2$ (symétrique de $t_2$ par rapport à $t_3$) depuis le niveau $y_2$, et le dernier échelon descend à l'instant $t'_0$ (symétrique de $t_0$ par rapport à $t_3$) du niveau $y_1$ au niveau $y_0$. La durée d pendant laquelle un échelon se maintient au niveau auquel il vient de passer est d'environ 70 nanosecondes pour les barres verticales et de 64 microsecondes pour les barres horizontales. On notera que le palier, de niveau $y_2$, du dernier échelon de la partie 12 du signal 11 a une durée d comme les autres paliers de cette partie, mais cette durée va de $t_2$ à $t'_2$ qui est symétrique de $t_2$ par rapport à $t_3$. Entre les niveaux $y_1$ et $y_2$, les amplitudes de tous les échelons du signal 11 sont égales. Le nombre des échelons est tel que le signal 11 produise sur l'écran du tube cathodique des barres ayant une largeur d'environ 7 à 8 mm. Ainsi, entre les instants $t_0$ et $t'_0$, le nombre de paliers de durée d du signal 11, qui est impair, peut être variable suivant les dimensions de l'écran du tube.

On a schématiquement représenté sur la figure 5 une partie agrandie 14 d'une barre verticale lorsque le canon correspondant à la couleur rouge reçoit un signal vidéo 15 conforme à l'invention, c'est-à-dire un signal d'allure sensiblement gaussienne. Bien entendu, ce signal 15 pourrait être numérique et avoir l'allure du signal 11 de la figure 4. Le signal 15 a été représenté en correspondance avec les colonnes de luminophores dont il sert à moduler l'illumination. Dans le cas de la figure 5, le signal 15 est tel que son niveau maximal coïncide avec le passage du faisceau du canon R sur une colonne 16 de luminophores rouges. On obtient alors sur l'écran une colonne rouge 16 d'intensité maximale. Les colonnes rouges 17 et 18 immédiatement voisines, de part et d'autre de la colonne de luminophores 16, ont sensiblement la même luminosité l'une et l'autre, mais cette luminosité est inférieure à celle de la colonne 16. Les colonnes suivantes 19 et 20, de part et d'autre des colonnes 17 et 18, ont sensiblement la même luminosité l'une et l'autre, mais cette luminosité est encore inférieure à celle des colonnes 17 et 18. La distribution de luminosité des colonnes de la partie 14 suit la loi gaussienne du signal 15. Il en est, bien entendu, de même sur toute la longueur de la barre rouge dont seule la partie 14 a été représentée sur la figure 5.

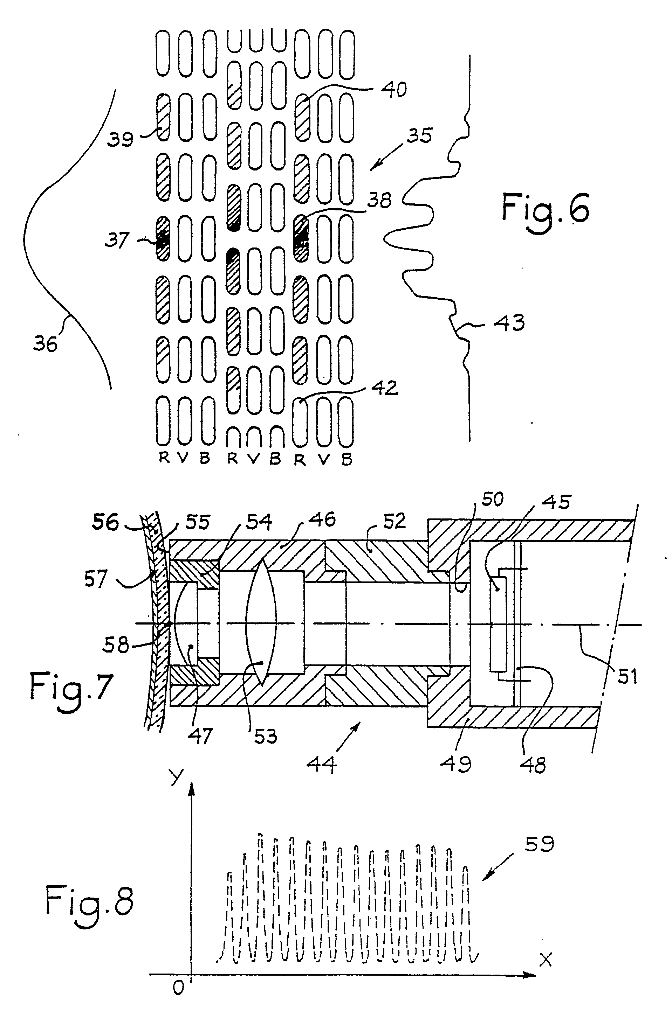

Si l'on place un détecteur photosensible approprié, tel que celui décrit ci-dessous en référence à la figure 7, sur la face avant de l'écran du tube cathodique, au niveau de la partie 14, on recueille à la sortie de ce détecteur un signal, tel sur le signal 21 représenté sur la figure 5, dont l'enveloppe 22 a la même allure que le signal 15. Ce signal 21 présente un grand pic central 23 dont l'amplitude correspond à la luminosité de la colonne 16, puis deux pics 24, 25 de part et d'autre du pic 23, dont l'amplitude est inférieure à celle du pic 23 et correspond à la luminosité des colonnes 17 et 18. Le signal 21 comporte, de part et d'autre des pics 24, 25, d'autres pics 26 et 27 d'amplitude inférieure à celle des pics 24, 25, correspondant à la luminosité des colonnes 19, 20. Si le signal vidéo était légèrement en avance par rapport au signal 15, et était tel que le signal 28 représenté en trait interrompu sur la figure 15, le maximum de ce signal 28 ne correspondant pas au passage de faisceau du canon R sur la colonne 16, mais par exemple à mi-chemin entre les colonnes 17 et 16, on obtiendrait à la sortie du détecteur photosensible un signal tel que le signal 29 représenté en bas de la figure 5. Ce signal 29 comporte deux grands pics 30, 31 de même amplitude, et de part et d'autre des pics 32, 33 plus petits. L'enveloppe 34 du signal 29 a la même allure que celle du signal 28, et le maximum de cette enveloppe ne correspond pas à un pic du fait que le maximum du signal 28 ne correspond pas au passage du faisceau du canon R sur une colonne de luminophores rouges.

Le niveau maximal de l'enveloppe 22 du signal 21 ou de l'enveloppe 34 du signal 29 définit avec une grande précision le milieu de la barre rouge, c'est-à-dire l'endroit précis de la barre de chaque côté duquel la barre présente, selon une section transversale, la même quantité de lumière. Dans le cas du signal 21, le milieu de la barre coïncide avec le milieu du pic 23, et dans le cas du signal 29, le milieu de la barre a son abscisse à mi-chemin entre les pics 30 et 31. Contrairement au cas classique illustré sur la figure 3, le procédé de l'invention permet d'appréhender un faible déphasage du signal vidéo, donc un faible déplacement de la barre de mire servant à la mesure. Sans bouger le détecteur photosensible, on commute le même signal vidéo sur le canon bleu, et l'on observe le signal à la sortie du détecteur. Le maximum de l'enveloppe de ce signal de sortie correspond au milieu de la barre bleue, et la distance entre le milieu de la barre rouge et le milieu de la barre bleue donne, après étalonnage du capteur, la valeur (exprimée en mm par exemple) de la convergence, pour les couleurs considérées du tube cathodique soumis à la mesure. On procède de même avec des barres vertes en commutant le signal vidéo sur le canon vert et en observant le signal à la sortie du détecteur.

Selon un autre aspect du procédé de l'invention, on détermine la position du milieu d'une barre verticale obtenue de la façon décrite ci-dessus en disposant sur la face avant de l'écran du tube cathodique un détecteur (dont un exemple de réalisation est décrit ci-dessous en référence à la figure 7) du type à capteur photosensible du type à transfert de charge, à haute résolution, orthogonalement par rapport à la barre, dans la zone où l'on veut mesurer la convergence. Le temps de mesure est limité à 40 ms au moins, soit le temps de balayage d'une image complète pour le standard européen. Un tel capteur fournit sous forme échantillonnée pour une barre d'une première couleur, par exemple rouge, un signal tel que le signal 21 ou 29 de la figure 5. On numérise linéairement ce signal échantillonné, et on effectue d'une part, pour tous les échantillons, la somme N1 des produits de la valeur numérique de chaque échantillon par le rang de l'échantillon au sein dudit signal échantillonné et d'autre part la somme N2 des valeurs numériques de tous lesdits échantillons. Le rang de l'abscisse du milieu de la barre (rouge pour l'exemple cité) est donné par le rapport N1/N2. Un tel calcul peut être mis en œuvre à l'aide d'un processeur dont le programme peut être facilement réalisé par l'homme de l'art. Sans bouger le capteur, on commute le même signal vidéo sur le canon correspondant à une deuxième couleur, par exemple bleue, et on répète le processus décrit ci-dessus pour la couleur rouge. On obtient alors le rang de l'abscisse du milieu de la barre bleue. La différence de rang des milieux des deux barres rouge et bleue donne, après étalonnage des capteurs (c'est-à-dire établissement de la correspondance entre différence de rang et distance réelle sur l'écran), la valeur de la composante horizontale de la convergence, dans la zone considérée, pour les deux couleurs considérées.

On a représenté sur la figure 6 une partie 35 d'une barre horizontale produite, à l'aide du signal vidéo 36 conforme à l'invention dans une zone de l'écran où l'on veut mesurer la « convergence horizontale ». Dans le cas illustré par la figure 6, le signal vidéo est appliqué sur le canon rouge. Les photophores rouges tels que les photophores 37 et 38 situés au milieu de la barre ont une luminosité maximale, tandis que les photophores rouges tels que les photophores 39 à 42 situés sur les bords de la barre ont une luminosité minimale. Un capteur photosensible du type précité, placé sur la face avant de l'écran, perpendiculairement à la barre, recueille un signal tel que le signal 43 représenté sur la figure 6. Ce signal peut être exploité de la même façon que le signal 21 recueilli pour la mesure de la « convergence verticale ».

On a représenté sur la figure 7 une vue en coupe schématique d'un capteur conforme à l'invention et permettant de mesurer la luminosité transversale des barres horizontales et verticales produites selon le procédé de l'invention.

Le capteur 44 de la figure 7 comporte une barette photosensible linéaire 45 (non représentée en détail) se composant par exemple de 1 024 photodiodes reliées à deux registres à décalages analogiques à transfert de charge. Chacune de ces photodiodes a une dimension de 13 × 8 microns, le pas des photodiodes de la barrette est de treize microns. Les charges acquises par les photodiodes illuminées sont transférées en parallèle dans lesdits registres à décalage analogique. En effectuant, grâce à une horloge externe (non représentée), une série de décalages, on obtient à la sortie de la barrette, lorsque le capteur est disposé sur l'écran du tube cathodique, perpendiculairement à une barre de mire, un signal de sortie échantillonné dont l'allure est semblable à celle du signal 21 de la figure 5 ou à celle du signal 43 de la figure 6, selon que l'on mesure la convergence horizontale ou verticale. Ce signal de sortie est échantillonné à la fréquence de l'horloge externe assurant les décalages. En comptant les périodes du signal d'horloge, il est facile de connaître le numéro de l'échantillon et donc son rang. Lesdits registres à décalage étant du type analogique, l'amplitude de chaque échantillon du signal de sortie est proportionnelle à l'intensité lumineuse reçue.

Afin de ne pas fausser la détermination du milieu de la barre de mire utilisée pour la mesure de convergence, il est nécessaire que la barrette 45 analyse la totalité de la largeur de la barre de mire, soit environ 7 mm. Si l'on veut par exemple mesurer des convergences allant jusqu'à 10 mm, il faut que la longueur du champ optique du capteur 44 soit d'au moins 16 mm. Dans un exemple de réalisation préférée, la longueur du champ optique est de 15 mm. Les photodiodes de la barrette 45 ayant une dimension de 13 × 8 microns leur champ optique serait alors de 15 × 9 microns environ. Ce champ est obtenu grâce à un objectif 46 placé entre la barrette 45 et l'écran. Le grandissement de cet objectif doit alors être de 13/15 = 0,87.

Un tel champ optique rectangulaire (de dimensions 15 microns × 15 mm) est insuffisant pour pouvoir effectuer les mesures de convergence pour n'importe quelle position du capteur sur l'écran du tube cathodique. En effet, lors de la mesure sur des barres verticales, si l'axe longitudinal de la barrette du capteur est placé par exemple sensiblement en face de la ligne de balayage A (voir figure 5, cette ligne A passe à mi-chemin entre des photophores voisins des colonnes 19, 16 et 20), le capteur ne recevra pratiquement aucune lumière provenant des photophores des colonnes 19, 16 et 20 du fait que la distance entre photophores voisins d'une même colonne est d'environ 0,2 mm alors que le champ des photodiodes du capteur ne fait que 15 microns de large. De même, si, lors de la mesure sur des barres horizontales, l'axe de la barrette du capteur est placé face à une colonne de luminophores verts ou bleus alors que l'on fait apparaître des barres rouges sur l'écran, ce capteur ne reçoit pratiquement aucune lumière provenant des photophores rouges.

Pour éviter cet inconvénient, sans modifier la longueur du champ du capteur (qui est de 15 mm dans l'exemple précité), l'invention prévoit de disposer dans le capteur un système optique complémentaire qui ne modifie que la largeur du champ optique rectangulaire du capteur. Pour que le capteur puisse, quelle que soit sa position sur l'écran du tube cathodique, recevoir à coup sûr la lumière émise par les photophores de chacune des colonnes de photophores qu'il coupe (cas de barres verticales) ou émises par les photophores des colonnes des trois colonnes (cas de barres horizontales), il faut et il suffit que la largeur du champ optique du capteur soit au moins égale à l'entraxe des luminophores d'une même colonne ; à savoir environ 1,2 mm. Le système optique complémentaire précité peut alors comporter une lentille cylindrique 47 disposée entre l'écran du tube cathodique et l'objectif 46, dont l'axe longitudinal est parallèle à l'axe longitudinal de la barrette 45, et dont le grandissement, considéré dans un plan perpendiculaire à son axe longitudinal est alors de 15/1 200 = 0,0125.

Dans la vue en coupe simplifiée du capteur de la figure 7, la barrette 45 est fixée sur un support 48, par exemple une plaquette de circuit imprimé comportant les circuits nécessaires à l'exploitation de la barrette photosensible. Le support 48 est fixé dans une chambre noire 49 comportant sur sa face antérieure une ouverture circulaire 50 dont l'axe 51 passe par le centre de la partie utile de la barrette 45. L'axe longitudinal de la barrette 45 est perpendiculaire à l'axe 51. Sur la face antérieure de la chambre 49, on fixe, coaxialement à l'axe 51, une bague allonge 52, puis l'objectif 46 comportant un système de lentilles 53. Cet objectif est, dans un exemple de réalisation préféré, un objectif, standard F : 1,4 de 25 mm. La bague allonge est prévue pour assurer avec l'objectif standard 46 ledit grandissement de 0,87. Il est toutefois bien entendu que si l'on utilisait un autre type d'objectif assurant à lui seul le grandissement de 0,87, la bague allonge 52 ne serait pas utilisée, un tel autre objectif étant directement fixé sur la chambre 49.

Sur la face antérieure (c'est-à-dire celle qui doit être tournée vers l'écran) de l'objectif 46, on fixe, à l'aide d'un support approprié 54, la lentille cylindrique 47 de façon que l'axe longitudinal de cette lentille soit parallèle à l'axe longitudinal de la barrette 45. La longueur de la lentille 47 est égale ou légèrement supérieure à la longueur du champ optique du capteur, à savoir 15 mm, le centre de la lentille 47 étant situé sur l'axe 51.

Le capteur 44 est appliqué par sa face antérieure 55 sur l'écran 56 (dont la couche intérieure photoémissive est référencée 57) du tube cathodique de façon que son axe 51 soit perpendiculaire au plan tangent (non représenté) au point d'incidence 58 de cet axe 51 sur l'écran 56. Des moyens (non représentés) permettent de maintenir fermement le capteur 44 dans cette position. Bien entendu, si l'on veut effectuer une mesure automatique et rapide simultanément de plusieurs zones de l'écran du tube cathodique, on utilise plusieurs capteurs identiques disposés face à ces zones et fixés de façon appropriée.

Le capteur 44 est relié à un circuit de commande et de traitement (non représenté) comportant essentiellement : des circuits de calcul réalisant automatiquement les calculs précités ; un circuit générateur de barres conformes à l'invention pouvant être relié séquentiellement à chacun des trois canons du tube cathodique (ou au moins des deux canons R et B) pendant environ 40 ms chaque fois ; un circuit générateur de signaux d'horloge pour assurer les décalages des registres à décalage de la barrette du capteur ; et des circuits d'alimentation en énergie appropriés.

Etant donné que la mise en œuvre du procédé de l'invention ne nécessite aucune modification des circuits de balayage classiques coopérant avec le tube cathodique soumis à la mesure, cette mesure pourrait s'effectuer sur un poste de télévision en ordre de marche, à condition simplement que ce poste comporte vue prise vidéo du type « Péritel » (dont sont munis la plupart des postes de télévision actuels) donnant accès direct aux trois canons du tube cathodique de ce poste. Cependant la mesure étant séquentielle, les circuits électroniques du téléviseur liés à la sensibilité du balayage devront avoir une stabilité suffisante afin de ne pas perturber la mesure.

Pour obtenir une valeur de composante de convergence facilement exploitable, il est préférable qu'elle soit directement exprimée sous forme d'une longueur vraie mesurable sur l'écran du tube cathodique. A cet effet, on étalonne le capteur de la manière suivante. On éclaire l'écran monochromatiquement (à l'aide de l'une quelconque des trois couleurs fondamentales) de façon uniforme, et on place le capteur sensiblement au centre de l'écran, l'axe longitudinal de la barrette 45 étant parallèle aux lignes de balayage de l'écran. On obtient alors à la sortie du capteur un signal tel que le signal 59 schématiquement représenté sur la figure 8 dans un repère orthonormé xoy. Ce signal 59 comporte une succession régulière de pics similaires ayant des amplitudes à peu près égales, chacun de ces pics correspondant à une colonne de photophores. On notera que la légère inégalité d'amplitudes que l'on peut relever pour les différents pics est due entre autres à une fluctuation d'intensité du faisceau électronique balayant les luminophores, à des pouvoirs photoémissifs différents des luminophores, et à des caractéristiques différentes des photodiodes de la barrette photosensible. De telles irrégularités affectent évidemment aussi le signal obtenu avec des barres de mire, mais sont négligeables par rapport aux variations d'amplitude de ce signal imposées par le signal vidéo.

Le nombre de pics du signal 59 est égal au nombre de colonnes de luminophores entrant dans le champ optique du capteur. Pour un champ ayant une longueur de 15 mm, le nombre de colonnes, et donc de pics, est d'environ 18, le pas des colonnes étant de 0,85 mm environ. Chacun de ces pics est composé d'environ quinze échantillons. On recherche alors, suivant le procédé exposé ci-dessus pour la détermination du rang du milieu d'une barre de mire, le rang du sommet de chaque pic du signal 59. Ensuite, on calcule l'intervalle moyen des pics, et on l'exprime en différence de rang D. On admet que cet intervalle moyen correspond au pas théorique des colonnes de luminophores de l'écran, qui est connu, et qui est généralement de 0,820 mm. Le pas des échantillons (c'est-à-dire une différence de rang égale à l'unité) du signal de sortie du capteur est alors égal à 0,820/D (valeur exprimée en millimètres, mesurable sur l'écran du tube cathodique). Il est alors facile d'exprimer en millimètres la valeur de la composante de convergence en multipliant la valeur de la différence de rangs respectifs des milieux des barres observées par le capteur par le rapport 0,820/D, qui est une constante du capteur considéré.

## Revendications

1. Procédé de mesure de convergence d'un tube cathodique à trois canons et à masque perforé, ce tube étant monté dans un récepteur de télévision muni d'une prise du type permettant d'injecter un signal vidéo monochrome sur chacun des trois canons correspondants de ce tube, selon lequel on produit sur l'écran du tube, dans chacune des zones où l'on veut mesurer la convergence, des barres monochromes alternativement de deux couleurs fondamentales différentes, verticales ou horizontales, fixes, et selon lequel on détermine le milieu de ces barres, caractérisé par le fait que ces barres ont une largeur au moins égale à sept millimètres environ, et s'étendent sur une hauteur ou largeur, respectivement, d'au moins un centimètre de part et d'autre du point de mesure, par le fait que l'on module l'intensité lumineuse de ces barres selon une loi au moins approximativement gaussienne, par le fait que l'on détermine le milieu d'une barre d'une première couleur fondamentale en mesurant la valeur de son intensité lumineuse en plusieurs points alignés selon une direction orthogonale par rapport à la barre, et en calculant le maximum de l'enveloppe du signal constitué par les valeurs successives ainsi mesurées, par le fait que l'on répète ces opérations pour une deuxième couleur fondamentale, au même endroit de mesure, et par le fait que l'on mesure la distance entre les milieux ainsi déterminés, cette distance étant la mesure de la composante horizontale ou verticale, pour des barres verticales ou horizontales respectivement, de la convergence du tube cathodique dans la zone considérée.

2. Procédé de mesure selon la revendication 1, caractérisé par le fait que le signal de modulation de faisceau monochrome permettant de produire lesdites barres verticales ou horizontales est produit de façon numérique et se présente sous forme d'une succession d'échelons, dont le nombre peut être de 7 à 15 environ, selon le format du tube cathodique mesuré, la première moitié de ces échelons étant de niveau constamment croissant et la deuxième moitié de niveau constamment décroissant, de préférence de façon symétrique par rapport à la première moitié, le niveau du palier du premier et du dernier échelons étant juste suffisant pour que l'illumination des luminophores correspondants puisse être perçue par le capteur, et l'amplitude maximale de ce signal étant telle qu'elle correspond à une utilisation optimale de la dynamique du système sans en provoquer la saturation.

3. Procédé de mesure selon la revendication 2, caractérisé par le fait que la durée des paliers des échelons est sensiblement identique pour tous les échelons et égale à environ 70 ns pour les barres verticales et à 64 microsecondes pour les barres horizontales.

4. Procédé de mesure selon l'une quelconque des revendications précédentes, et mis en œuvre à l'aide d'un capteur photosensible du type à transfert de charge, à haute résolution, disposé orthogonalement par rapport à la barre de mire d'une première couleur fondamentale modulée par un signal vidéo conforme à l'invention, dans la zone où l'on veut mesurer la convergence, ce capteur fournissant un signal de sortie échantillonné, caractérisé par le fait que l'on numérise linéairement ce signal échantillonné, que l'on effectue d'une part, pour tous les échantillons, la somme N1 des produits de la valeur numérique de chaque échantillon par le rang de l'échantillon au sein dudit signal échantillonné, et d'autre part la somme N2 des valeurs numériques de tous lesdits échantillons, le rang de l'abscisse du milieu de la barre étant donné par le rapport N1/N2, et par le fait que, sans déplacer le capteur, on commute le même signal vidéo pour obtenir dans la zone considérée une barre d'une deuxième couleur fondamentale, et on procède de même pour obtenir le rang de l'abscisse du milieu de la barre de ladite deuxième couleur fondamentale, la valeur de la composante de la convergence, dans la zone considérée, étant donnée par la différence de rangs des milieux des deux barres précitées de première et deuxième couleurs fondamentales.

5. Procédé de mesure selon la revendication 4, caractérisé par le fait que pour obtenir la valeur de la composante de convergence exprimée sous forme d'une longueur vraie mesurable sur l'écran du tube cathodique, on éclaire l'écran monochromatiquement de façon uniforme, que l'on place le capteur sensiblement au centre de l'écran, l'axe longitudinal de la partie utile du capteur étant parallèle aux lignes de balayage de l'écran, par le fait que l'on détermine la valeur moyenne, exprimée en différence de rangs d'échantillons du signal de sortie du capteur, du pas des sommets des pics du signal de sortie du capteur, ladite valeur de la composante, exprimée sous forme d'une longueur vraie, étant égale à ladite différence de rangs des milieux des deux barres de couleurs différentes, multipliée par le rapport entre le pas théorique des colonnes de luminophores de même couleur et ladite valeur moyenne du pas des sommets des pics du signal de sortie du capteur.

6. Dispositif de mesure de composante verticale ou horizontale de convergence d'un tube cathodique à trois canons et à masque perforé pour la mise en œuvre du procédé selon l'une quelconque des revendications précédentes, caractérisé par le fait qu'il comporte un générateur de barres horizontales et verticales dont le signal modulant a une allure au moins approximativement gaussienne, ce générateur étant relié par un sélecteur aux canons du tube cathodique à mesurer, et au moins un capteur photosensible (44) relié à un circuit de calcul synchronisé avec ledit sélecteur, ce circuit de calcul déterminant les emplacements relatifs, par rapport à un point de référence du capteur, du milieu lumineux des barres, et calculant leur distance mutuelle.

7. Dispositif de mesure selon la revendication 6, caractérisé par le fait que le capteur comporte essentiellement un transducteur photosensible (45) du type photosensible à transfert de charge comprenant un grand nombre de photodiodes alignées, et un système optique (47, 53), disposé devant le transducteur et ayant un grossissement, selon l'axe longitudinal du transducteur, sensiblement égal au rapport entre la longueur de la partie active du transducteur et le double ou le triple de la largeur des barres obtenues sur l'écran, et le grossissement de ce système optique étant, dans le sens perpendiculaire audit axe longitudinal du transducteur, sensiblement égal au rapport entre la largeur de ladite partie active du transducteur et la distance entre les centres de deux luminophores consécutifs d'une même colonne de luminophores de l'écran du tube cathodique.

8. Dispositif de mesure selon la revendication 7, caractérisé par le fait que le système optique comprend une lentille biconvexe (53) et une lentille cylindrique (47).

**Claims**

1. Process of measuring the convergence of a cathode ray tube having three guns and a perforated mask, said tube being mounted in television receiver provided with a connector of the type allowing a monochromous video signal to be injected into each one of said three gungs corresponding to the tube, wherein, in each zone in which the convergence is to be measured, monochrome bars are produced on the tube screen having two different primary colours in alternating arrangement and being vertical or horizontal and fixed, and wherein the middle of said bars is determined, characterized in that said bars have a width of at least about seven millimetres and extend respectively over a height or width, of at least one centimetre on either side of the measuring point ; in that the light intensity of said bars is modulated in accordance with a substantially Gaussian law ; in that the middle of a first bar having a first primary colour is determined by measuring the value of its light intensity at a plurality of points aligned in a direction orthogonal with respect to the bar, and by calculating the maximum of the envelope of the signal, which is constituted by the thus determided succesive values thus measured, in that the sema operations are made for a second primary colour in the same measurement place, and in that the distance between the thus determined middles is measured, said distance being a measure of horizontal or vertical component respectively for vertical or horizontal bars, of the convergence of said cathode ray tube in the zone considered.

2. Process of measuring according to claim 1, characterized in that the modulation signal of the monochrome beam, which allows said vertical and horizontal bars to be produced is produced in a digital manner and has the shape of a succession of steps the number of which may be comprised between about 7 and 15, depending on the format of the cathode ray tube being measured, the first half of said steps having a constantly increasing level, and the second half having a level constantly decreasing, preferably, in a manner symmetric with respect to said first half, the level of the plateau of the first and last steps being just sufficient to enable the detector to perceive the illumination of the corresponding luminophore elements, while the maximum amplitude of said signal is such that it corresponds to an optimum utilization of the dynamics of the system without causing the same to be saturated.

3. Process of measuring according to claim 2, characterized in that the duration of the plateaux of said steps is substantially identical for all steps and equals about 70 ns for the vertical bars and 64 µs for the horizontal bars.

4. Process for measuring according to any one of the preceding claims, and carried out by means of a light-sensitive detector of the charge transfer type having a high resolution and being disposed orthogonally with respect to the pattern bar having a first primary colour, modulated by a video signal in accordance with the invention, said detector being arranged in the zone in which the convergence is to be measured and delivering a sampled output signal, characterized in that said sampled output signal is linearly digitalized ; in that, on the one hand, for all samples the sum N1 of the products of the digital value of each sample multiplied by the rank of the sample within said sampled signal is established and, on the other hand, the sum N2 of the digital values of all said samples, the rank of the abscissa of the middle of the bar being given by the ratio N1/N2 ; and in that, without displacing said detector, the same video signal is commutated so as to obtain in the zone considered a bar having a second primary colour, the same operating mode being used for obtaining the rank of the abscisse of the middle of the bar having said second primary colour, the value of the convergence component, in the zone considered, being given by the difference of the ranks of the middles of said two bars having said first and second primary colours.

5. Process of measuring according to claim 4, characterized in that, with a view to obtaining the value of the convergence component, expressed by a true length measurable on the screen of the cathode ray tube, said screen is lighted mono-chromatically in an uniform manner, said detector is placed in the center of the screen so that the longitudinal axis of the useful portion of said detector is parallel to the scanning lines of the screen ; in that the mean value of the pitch of the peaks of said output signal of the detector is determined and expressed by the difference of the ranks of the detector output signal samples, said value of the component, as expressed in terms of difference a true length, being equal to said difference of the ranks of the middles of said two bars having different colours, multiplied by the ratio of the theoretical pitch of the luminophore column having an identical colour to said mean value of the pitch of the summit of said detector output signal peaks.

6. Device for measuring the vertical and horizontal convergence component of a cathod ray tube having three gungs and a perforated mask, for carrying out the process according to any one of the preceding claims, characterized in that it comprises a horizontal and vertical bar generator, the modulating signal of which having an at least approximately Gaussian shape, said generator being connected by a selector to the guns of the cathode ray tube to be measured, and at least one light-sensitive detector (44) connected to a computing circuit synchronized with respect to said selector, said computing circuit being adapted to determine the relative locations, with respect to a reference point of said detector, of the luminous middle of said bars, and to calculate their mutual distance.

7. Measuring device according to claim 6, characterized in that said detector essentially comprises a light-sensitive transducer (45) of the load transfer type including a great number of aligned photodiodes, and an optical system (47, 53) disposed in front of said transducer and having a magnifying power, in the direction of the longitudinal axis of said transducer, which substantially equals the ratio of the length of the active transducer portion to twice or three times the width of the bars produced on the screen, the magnifying power of said optical system, in the direction perpendicular to said longitudinal axis of the transducer, being substantially equal to the ratio of the width of said active transducer portion, to the distance between the centers of two adjacent luminophore elements of any give one of the luminophore columns of the screen of said cathode ray tube.

8. Measuring device according to claim 7, characterized in that said optical system comprises a biconvex lens (53) and a cylindrical lens.

**Patentansprüche**

1. Verfahren zur Messung der Konvergenz einer drei Strahlenkanonen und eine gelochte Maske aufweisenden Kathodenstrahlröhre, die in einem Fernsehempfänger angeordnet ist, welcher eine Anschluss-Steckervorrichtung besitzt, vermittels welcher eine einfarbiges Video-Signal an jeder der drei dieser Röhre entsprechenden Strahlkanonen anlegbar ist, wobei man auf dem Röhrenleuchtschirm in jeder der Zonen, in welchen die Konvergenz gemessen werden soll, einfarbige, abwechselnd je eine von zwei verschiedenen Grundfarben besitzende ortsfeste vertikale bzw. horizontale Farbbalken erzeugt, und wobei man die Mitte dieser Balken bestimmt, dadurch gekennzeichnet, dass diese Balken wenigstens etwa sieben Millimeter lang sind und sich über eine Höhe bzw. Breite von wenigstens einem Zentimeter beiderseits des Messpunkts erstrecken ; dass man die Leuchtkraft dieser Balken gemäss eines wenigstens annähernd Gauss'schen Gesetzes formuliert ; dass man die Mitte eines ersten Balkens mir einer ersten Grundfarbe durch Messung seiner Leuchtkraft an mehreren ein einer zum Balken orthogonalen aus einander ausgerichteten Punkten, sowie durch berechnung des durch die somit nacheinander gemessenen Werte bestimmten Maximalwerte der Signalhülle bestimmt ; dass man diese Verfahrensschritte in Bezug auf eine zweite Grundfarbe wiederholt ; und dass man den Abstand zwischen den dieserart bestimmten Mitteln misst, wobei dieser Abstand das Mass für die horizontale bzw. vertikale Komponente bei vertikalen bzw. horizontalen Balken, sowie der Konvergenz der Kathodenstrahlröhre in der betreffenden Zone darstellt.

2. Messverfahren nach Anspruch 1, dadurch gekennzeichnet, dass das die Erzeugung der vertikalen bzw. horizontalen Balken ermöglichende Einfarbenstrahlenbündel-Modulationssignal auf numerische Weise erzeugt wird und in Form aufeinanderfolgender Stufen vorliegt, deren Anzahl nach Massgabe des Formats der zu messenden Kathodenstrahlröhre zwischen etwa 7 und 10 liegen kann, wobei die erste Hälfte dieser Stufen einen ständig ansteigenden Pegel und die zweite Hälfte einen vorzugsweise symmetrisch zur ersten Hälfte ständig abfallenden Pegel aufweist, wobei der Pegel des Absatzes der ersten und der letzten Stufe gerade hinreichen ist, um es dem Fühler zu ermöglichen, die Aufhellung der betreffenden Leuchtstoffe zu erfassen, und wobei die Maximalamplitude dieses Signals derart gewählt ist, dass sie einer Optimalnutzung der Dynamik des Systems entspricht, ohne zu einer Sättigung desselben zu führen.

3. Messverfahren nach Anspruch 2, dadurch gekennzeichnet, dass die Dauer des Stufenabsatzes für alle Stufen wesentlich gleich ist und bei den vertikalen Balken etwa 70 ns, jedoch bei den horizontalen Balken 64 µs beträgt.

4. Messverfahren nach einem der vorhergehenden Ansprüche, durchgeführt mit Hilfe eines lichtempfindlichen Ladungsübertragungsfühlers mit hohem Auflösungsvermögen, der in Bezug auf den eine erste Grundfarbe besitzenden, vermittels eines Videosignals gemäss der Erfindung modulierten, angezielten Musterbalkens orthogonal in derjenigen Zone angeordnet ist, in welcher die Konvergenz gemessen werden soll, wobei dieser Fühler ein einer Musterentnahme unterzogenes Ausgangssignal erzeugt, dadurch gekennzeichnet, dass man dieses gemusterte Signal linear numerisch ausdrückt, wobei einerseits die Summe N1 der Produkte des numerischen Wertes jedes Musters und des Ranges des Musters innerhalb des gemusterten Signals, und andererseits die Summe N2 der numerischen Werte all dieser Signal berechnet wird, und der Rang der Abszisse der Balkenmitte durch das Verhältnis N1/N2 gegeben ist ; und dass man, ohne den Fühler zu verstellen, das gleiche Videosignal umschaltet, um in der betreffenden Zone einen Balken der zweiten Grundfarbe zu erzeugen, während man auf die gleiche Weise verfährt, um den Rang der Abszisse der Mitte des Balkens der zweiten Grundfarbe zu bestimmen, wobei der Wert der Konvergenzkomponente in der betreffenden Zone durch die Differenz der Mittenränge der beiden genannten Balken mit der ersten bzw. der zweiten Grundfarbe gegeben ist.

5. Messverfahren nach Anspruch 4, dadurch gekennzeichnet, dass man zwecks Bestimmung das durch eine auf dem Leuchtschirm der Kathodenstrahlröhre messbaren wirklichen Länge ausgedrückten Wertes der Konvergenzkomponente den Leuchtschirm einheitlich monochromatisch beleuchtet, den Fühler wesentlich mittig am Leuchtschirm anordnet, derart, dass die Längsachse des wirksamen Fühlerteils parallel zu den Abtastlinien des Leuchtschirms ist ; ferner dadurch, dass man den als Rangdifferenz der Fühlerausgangsmuster ausgedrückten Mittelwert der Spitzen-Teilungsabstände des Fühlerausgangssignals bestimmt, wobei der genannte Komponentenwert, als wirklicher Längenwert ausgedrückt, der Rangdifferenz der Mitten der beiden Balken mit unterschiedlichen Farben, multipliziert mit dem Verhältnis zwischen dem theoretischen Teilungsabstand der Leuchtstoffsäulen gleicher Farbe und dem Mittelwert des Teilungsabstands der Spitzen des Fühlerausgangssignals gleich ist.

6. Vorrichtung zum Messen der vertikalen und horizontalen Konvergenzkomponente einer Kathodenstrahlröhre mit drei Strahlkanonen und einer gelochten Maske, zur Durchführung des Verfahrens nach einem der vorhergehenden Ansprüche, dadurch gekennzeichnet, dass sie einen Horizontalbalken- und Vertikalbalkenerzeuger umfasst, dessen Modulationssignal einen wenigstens annähernd Gauss'schen Verlauf aufweist, wobei dieser Balkenerzeuger über einen Wähler mit Strahlkanonen der zu messenden Kathodenstrahlröhre verbunden ist, während die Vorrichtung ferner wenigstens einen lichtempfindlichen Fühler (44) besitzt, der an einen mit dem Wähler synchronisierten Rechenkreis angeschlossen ist,der die relative Lagen der Leuchtmitten der Balken in Bezug auf eine Bezugspunkt des Fühlers bestimmt und ihren gegenseitigen Abstand berechnet.

7. Messvorrichtung nach Anspruch 6, dadurch gekennzeichnet, dass der Fühler im Wesentlichen einen lichtempfindlichen Transductor (45) des Ladungsübertragungstyps aufweist, der eine grosse Anzahl von reihenmässig angeordneten Photodioden besitzt, sowie ein vor dem Transductor angeordnetes optisches System (47, 53) mit einer in Richtung Transductor-Längsachse gemessenen Vergrösserung, die wesentlich gleich ist dem Verhältnis zwischen der Länge des aktiven Teils des Transductors und dem doppelten oder dreifachen Wert der Breite der auf dem Leuchtschirm erzeugten Balken, wobei in der zur Richtung der Transductor-Längsachse senkrechten Richtung die Vergrösserung dieses optischen Systems wesentlich gleich ist dem verhältnis zwischen der Breite des genannten aktiven Transductorteils und dem Abstand zwischen den Mitten zweier aufeinanderfolgender Leuchtstoffe einer und derselben Leuchtstoffsäule des Kathodenstrahlröhrenleuchtschirms.

8. Messvorrichtung nach Anspruch 7, dadurch gekennzeichnet, dass das optische System eine bikonvexe Linse (53) und eine zylindrische Linse (47) aufweist.

# Fig.1

FR     FV     FB

# Fig.2

# Fig.3

R V B R V B R V B R V B

1

Fig.4

Fig.5

2

Fig.6

R V B R V B R V B

Fig.7

Fig.8